# EUROPEAN PATENT APPLICATION

(11) **EP 4 428 988 A1**
(43) Date of publication of application: **11.09.2024**
(21) Application number: 22941933.8
(22) Date of filing: 16.05.2022
(51) Int. Cl.: H01M 10/613, H01M 10/625, H01M 10/6554

(54) **BATTERY AND ELECTRIC DEVICE**

(71) Applicant: Contemporary Amperex Technology Co., Limited, Ningde, Fujian 352100 (CN)
(72) Inventor: CHAI, Zhisheng, Ningde, Fujian 352100 (CN); CHI, Qingkui, Ningde, Fujian 352100 (CN)
(74) Representative: Laufhütte, Dieter
(86) International application number: PCT/CN2022/093134
(87) International publication number: WO 2023/220884

(57) **Abstract**

Embodiments of the present application provide a battery and an electric device. The battery comprises: battery cells, the quantity of the battery cells being more than one, and each battery cell being cylindrical; and a box body, provided with an accommodating cavity, the accommodating cavity being used for accommodating the plurality of battery cells. The area of the accommodating cavity on a plane perpendicular to the central axis of the battery cell is S, the diameter of a single battery cell is A, and A/S≤25× 10⁻⁶. According to the present application, the ratio of the diameter A of the battery cell to the area S of the accommodating cavity of the box body on the plane perpendicular to the central axis of the battery cell is controlled to satisfy: A/S≤25 × 10⁻⁶. The waste of the area of a corner region in the box body is reduced, the space utilization rate of a battery is effectively improved, and the effect of improving energy density of the battery is achieved.

## Description

### Technical Field

The present application relates to the technical field of batteries, and in particular, to a battery and an electric device.

### Background Art

Energy conservation and emission reduction are keys to the sustainable development of the automobile industry, and electric vehicles have become an important part of the sustainable development of the automobile industry, due to their advantages in energy conservation and environmental protection. For electric vehicles, battery technology is an important factor in its development.

Improving the energy density of the battery is an important direction for the development of the battery industry at present, and the energy density of the battery can be effectively improved by increasing the space utilization rate in the battery box body, but the low space utilization rate of the existing battery severely limits the improvement of the energy density of the battery.

### Summary

The present application provides a battery and an electric device. The battery may effectively improve the space utilization rate, facilitating great improvement of the energy density of the battery.

In a first aspect, the present application provides a battery, including: a plurality of battery cells which are cylindrical; and a box body, having an accommodation cavity, configured to accommodate the plurality of battery cells; wherein the area of the accommodation cavity on a plane perpendicular to the central axes of the battery cells is S, and the diameter of a single battery cell is A, satisfying, A /S≤25×10⁻⁶.

In the above technical solution, the battery cells are cylindrical, and the battery includes a box body and the plurality of battery cells, wherein the plurality of battery cells are arranged in the battery box body, and the central axes of the battery cells are parallel to each other, wherein because the cross-sections of the cylindrical battery cells are circular, in the case where the area of the accommodation cavity of the box body on the plane perpendicular to the central axes of the battery cells is constant, if the diameter of the single battery cell is too large, a large amount of corner region area in the box body may be wasted, and the number of battery cells that can be accommodated in the box body is caused to be decreased, resulting in a decrease in the area utilization rate of the box body. In the present application, the ratio of the diameter A of the battery cell to the area S of the accommodation cavity of the box body on the plane perpendicular to the central axis of the battery cell is controlled at A/S≤25×10⁻⁶, which is beneficial to reduce the waste of the corner region area in the box body, increase the number of battery cells arranged in the box body, effectively improve the space utilization rate of the battery, and achieve the effect of increasing the energy density of the battery.

According to some embodiments of the present application, the diameter A of the single battery cell is ≥15mm.

In the above technical solution, the diameter of the battery cell is greater than or equal to 15 mm, because the smaller the diameter of the battery cell is, the more difficult it is to manufacture the battery cell, and in the case where the area of the box body of the battery is constant, the number of arranged battery cells is larger in order to achieve the same space utilization rate, leading to increased manufacturing cost of the overall battery. In the present application, the diameter of the battery cell is set to be greater than or equal to 15mm, which can effectively avoid the risks of increasing the manufacturing difficulty and manufacturing cost of the battery cells.

According to some embodiments of the present application, 1500000mm²≤ 1500000mm2≤ 3000000mm².

In the above technical solution, the area S of the accommodation cavity of the box body on a plane perpendicular to the central axes of the battery cells is between 1500000mm² and 3000000mm², effectively ensuring the universality of specifications of the battery.

According to some embodiments of the present application, the battery further includes: at least one thermal management member, each provided between two adjacent rows of battery cells, wherein the thickness of the thermal management member is B, which satisfies 0.06≤ B/A≤0.14.

In the above technical solution, a thermal management member is provided between two adjacent rows of battery cells, and the thermal management member performs temperature management on the battery cells to heat or cool the battery cells according to the influence of the battery use environment or other factors, so as to ensure the stability of battery cell performance. The arrangement of the thermal management member may directly affect the space utilization rate of the battery, but if the thickness of the thermal management member is too small, it may directly affect the structural strength of the thermal management member, which cannot meet the overall structure strength requirements of the battery, and may cause over-small flow rate of a fluid in the thermal management member, which cannot meet the requirements of battery temperature management; and if the thickness of the thermal management member is too large, it may cause redundance and waste of heat exchange energy, and more importantly, may occupy too much space in the box body, affecting the space occupancy rate and losing energy density. In the present application, the ratio of the thickness B of the thermal management member to the diameter A of the battery cell is greater than or equal to 0.06 and less than or equal to 0.14. Such a setting can effectively reduce the risk of insufficient structural strength and substandard fluid flow rate caused by insufficient thickness of thermal management member, and simultaneously avoid the thermal management member from occupying excessive space in the box body, which is conducive to improving the space occupancy rate of the battery and thereby ensuring the energy density of the battery.

According to some embodiments of the present application, the minimum distance between two adjacent battery cells located in the same row is C, satisfying 0.1≤(B+C)/A≤0.145.

In the above technical solution, based on the premise that the ratio of the thickness B of the thermal management member to the diameter A of the battery cell is greater than or equal to 0.06 and less than or equal to 0.14, the ratio of the sum of the thickness B of the thermal management member and the minimum distance C between two adjacent battery cells in the same row to the diameter A of the battery cell is greater than or equal to 0.1 and less than or equal to 0.145. In the state where the range of the ratio of the diameter of the cylindrical battery cell to the thickness of the thermal management member is determined, the larger the contact angle of the battery cell and thermal management member is, the larger the area of the battery cell covered by the thermal management member is, and the stronger the thermal management effect of the battery cell is. When the minimum distance C between two adjacent battery cells located in the same row is too small, the contact angle between the battery cell and the thermal management member is too small, resulting in insufficient thermal management effect, making the battery temperature too high during fast charging, and when the minimum distance C between two adjacent battery cells in the same row is over-large, the area utilization rate of the battery pack may be affected. The present application limits the ratio of the sum of the thickness B of the thermal management member and the minimum distance C between two adjacent battery cells in the same row to the diameter A of the battery cell, which can effectively reduce the risk of too small contact angle between the battery cell and the thermal management member, thereby effectively ensuring the thermal management effect, and simultaneously avoiding the waste of space in the box body of the battery due to that the thickness B of the thermal management member and the minimum distance C between two adjacent battery cells in the same row are relatively too large.

According to some embodiments of the present application, the minimum distance between two adjacent battery cells in different rows is D, satisfying 1mm≤D≤2.5mm.

In the above technical solution, the minimum distance D between two adjacent battery cells located in different rows is greater than or equal to 1 mm and less than or equal to 2.5 mm, that is, there is a gap between two adjacent battery cells in different rows. The above-mentioned gap refers to the minimum distance between two adjacent battery cells in different rows that are not equipped with the thermal management member. If the minimum distance D between the two adjacent battery cells located in different rows is too small, when some battery cell undergoes thermal runaway, it is easy to cause thermal runaway of the battery cells in the adjacent row, due to the influence of high temperature; while if the minimum distance D between the two adjacent battery cells located in different rows is too large, it may waste too much space in the box body of the battery, thereby affecting the space utilization rate of the battery. In the present application, the minimum distance D between two adjacent battery cells in different rows is set between 1mm and 2.5mm, which can effectively reduce the risk of mutual diffusion between battery cells in different rows during thermal runaway while considering the space utilization rate of the battery, facilitating improving the energy density of the battery while considering the safety of the battery.

According to some embodiments of the present application, 1.5mm≤D≤2.5mm.

In the above technical solution, the minimum distance D between two adjacent battery cells located in different rows is set between 1.5 mm and 2.5 mm, which is conducive to further reducing the risk of mutual diffusion between battery cells in different rows during thermal runaway.

According to some embodiments of the present application, the battery further includes: at least one thermal insulation member, each provided between the battery cells of two adjacent rows, wherein the minimum distance between the battery cells of two rows in contact with the same thermal insulation member is E, which satisfies 0.5mm≤E≤2.5mm.

In the above technical solution, a thermal insulation member is provided between battery cells of two adjacent rows, and the thermal insulation member can play a role of heat insulation for the battery cells of adjacent two rows located at two sides of the thermal insulation member, avoiding temperature transferring between the battery cells of different rows and effectively reducing the influence of the battery cell undergoing the thermal runaway on the battery cells in the adjacent row. The risk of mutual diffusion between different rows of battery cells during thermal runaway is effectively reduced due to the arrangement of the thermal insulation member, and in order to improve space utilization rate, the minimum distance between the battery cells of two adjacent rows provided with the thermal insulation member may be controlled between 0.5mm and 2.5mm, effectively reducing the waste of the space of the box body while ensuring the installation space of the thermal insulation member.

According to some embodiments of the present application, 1mm≤E≤2mm.

In the above technical solution, the minimum distance between the battery cells of two adjacent rows provided with the thermal insulation member is controlled at 1 mm to 2 mm, which is conducive to further ensuring the thickness of compressed thermal insulation member, so as to ensure the thermal insulation effect and simultaneously further reduce the waste of the space of the box body.

According to some embodiments of the present application, the plurality of battery cells are arranged in multiple rows, and each two rows of the battery cells form a battery unit. The battery further includes: at least one thermal management member each provided between two adjacent battery units, and at least one thermal insulation member each provided between the two rows of the battery cells of the corresponding battery unit, wherein the thickness of the thermal management member is B, and the minimum distance between the two rows of the battery cells of the battery unit is E, and the minimum distance between two adjacent battery cells in the same row is C, satisfying (B+C+E)/A≤0.16.

In the above technical solution, a plurality of battery cells are arranged in multiple rows, and each two rows of the battery cells form a battery unit, a thermal management member is arranged between two adjacent battery units, and a thermal insulation member is provided between the two rows of the battery cells of the battery unit. That is, the thermal management members and the thermal insulation members are alternately arranged between the multiple rows of battery cells. Such arrangement enables each battery cell in the battery to be in contact with only one thermal management member, facilitating ensuring the balance of the thermal management of the battery cells of the battery. That the thermal insulation member is provided between the battery cells of two adjacent rows provided with no thermal management member is conducive to reducing the risk of the battery cells of two adjacent rows provided with no thermal management member influence each other when the thermal runaway occurs. In the present application, the ratio of the sum of the thickness B of the thermal management member, the minimum distance E between the battery cells of two rows of a battery unit, and the minimum distance C between two adjacent battery cells of the same row to the diameter A of the battery cell is controlled at 0.16 or below, to avoid excessive waste of space in the box, which is conducive to ensuring space utilization rate and thereby ensuring the energy density of the battery.

According to some embodiments of the present application, the minimum distance between two adjacent battery cells of the same row is C, satisfying 0.5mm≤C≤ 3.5mm.

In the above technical solution, the minimum distance C between two adjacent battery cells of the same row is greater than or equal to 0.5mm and less than or equal to 3.5mm, which can effectively reduce the risk of thermal runaway diffusion caused by the too small distance between the two adjacent battery cells of the same row, and simultaneously avoid excessive waste of the space in the body due to the too large distance between the two adjacent battery cells of the same row, which is conducive to improving the energy density of the battery while considering the safety of the battery.

According to some embodiments of the present application, 1mm≤ C≤2.5mm.

In the above technical solution, the minimum distance C between two adjacent battery cells of the same row is greater than or equal to 1mm and smaller than or equal to 2.5 mm, further reducing the risk of thermal runaway diffusion caused by too small distance between two adjacent battery cells of the same row.

According to some embodiments of the present application, the thermal conductivity coefficient of the thermal insulation member is K, which satisfies K≤0.1W/m·K.

In the above technical solution, the thermal conductivity coefficient of the thermal insulation member is less than or equal to 0.1 W/m·K, which is beneficial to ensure the thermal insulation performance of the thermal insulation member, thereby improving the thermal insulation effect of the thermal insulation member.

According to some embodiments of the present application, the material of the thermal insulation member includes at least one of mica, asbestos, aerogel, foam plastic, and silica gel.

In the above technical solution, the material of the thermal insulation member may be one or a combination of two or more of mica, asbestos, aerogel, foam plastic, and silica gel. The material of the thermal insulation member directly affects the thermal conductivity coefficient of the thermal insulation member, so as to influence the thermal insulation effect of the thermal insulation member. The material technology of the thermal insulation member of the present application is mature, effectively ensuring the thermal insulation effect of the thermal insulation member, enabling strong practicability.

In a second aspect, the present application provides an electric device, including at least one battery mentioned above, wherein the battery is used to supply electric energy.

### Brief Description of Drawings

In order to more clearly illustrate the technical solutions of the embodiments of the present application, the drawings that are required to be used in the embodiments of the present application will be briefly introduced below. Apparently, the following described drawings only show some embodiments of the present application, and those skilled in the art can also obtain other drawings based on these drawings without paying creative work.
FIG. 1 is a schematic structural view of a vehicle provided in some embodiments of the present application;
FIG. 2 is an exploded view of a battery provided in some embodiments of the present application;
FIG. 3 is a local front view of a battery, in a first state, provided in some embodiments of the present application;
FIG. 4 is a local front view of a battery, in a second state, provided in some embodiments of the present application;
FIG. 5 is a local front view of a battery, in a third state, provided in some embodiments of the present application; and
FIG. 6 is a local front view of a battery, in a fourth state, provided in some embodiments of the present application.

In the drawings, the drawings are not drawn to the actual scale.

Reference signs: 1000-vehicle; 100-battery; 10-battery cell; 11-first battery cell; 12-second battery cell; 13-third battery cell; 20-box body; 21-first part; 22-second part; 23-accommodation cavity; 30-thermal management member; 31-first surface; 32-second surface; 40-thermal insulation member; M-plane; α-contact angle; 200-controller; 300-motor.

### Detailed Description of Embodiments

In order to make the purposes, technical solutions and advantages of the embodiments of the present application clearer, the technical solutions in the embodiments of the present application will be clearly and completely described below in conjunction with the drawings in the embodiments of the present application. Obviously, the described embodiments are some, but not all of embodiments of the present application. Generally, the components of the embodiments of the present application described and illustrated in the drawings here may be arranged and designed in a variety of different configurations.

Hence, the following detailed description of the embodiments of the present application provided in the drawings is not intended to limit the scope of the claimed application, but merely represents selected embodiments of the present application. Based on the embodiments in the present application, all other embodiments obtained by persons of ordinary skill in the art without paying creative efforts fall within the protection scope of the present application.

Embodiments of the technical solutions of the present application will be described in detail below in conjunction with the drawings. The following embodiments are only used to illustrate the technical solutions of the present application more clearly, and therefore are only examples, rather than limiting the protection scope of the present application.

Unless otherwise defined, all technical and scientific terms used herein have the same meaning as commonly understood by those skilled in the technical field of the present application. The terms used herein are only for the purpose of describing embodiments, and are not intended to limit the present application. Terms "comprising" and "having" and any variations thereof in the specification and claims of the present application and the above description of the drawings are intended to cover a non-exclusive inclusion.

In the description of the embodiments of the present application, technical terms such as "first" and "second" are only used to distinguish different objects, and should not be understood as indicating or implying importance in relativity or implicitly indicating the number, specific sequence, or primary-subordinate relationship of the indicated technical features. In the description of the embodiments of the present application, "plurality" means two or more, unless otherwise specifically defined.

Reference made herein to "embodiment" means that a particular feature, structure, or characteristic described in connection with the embodiment may be included in at least one embodiment of the present application. The phases occurring in various places in the specification do not necessarily all refer to the same embodiment, nor are separate or alternative embodiments mutually exclusive of other embodiments. It is understood explicitly and implicitly by those skilled in the art that the embodiments described herein may be combined with other embodiments.

In the description of the embodiments of the present application, "plurality" means two or more (including two).

In the description of the embodiments of the present application, the orientation or positional relationship indicated by technical terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are based on orientation or positional relationship shown in the drawings, only for the convenience of describing the embodiments of the present application and simplifying the description, rather than indicating or implying that the device or element referred to must have a specific orientation, or be constructed and operated in a specific orientation, and therefore cannot be understood as a limitation on the embodiments of the present application.

In the description of the embodiments of the present application, unless otherwise clearly specified and limited, technical terms such as "provide", "install", "link", "connect" and "fix" should be understood in a broad sense, for example, it may be a fixed connection, or a detachable connection, or an integral connection; it may be a mechanical connection, or an electrical connection, or a signal connection; it may be a direct connection, or an indirect connection through an intermediary, or it may be an internal communication between two elements or an interaction relationship between two elements. Those of ordinary skill in the art may understand the specific meanings of the above terms in the embodiments of the present application according to specific situations.

In the embodiments of the present application, the same reference signs represent the same components, and for the sake of brevity, in different embodiments, detailed descriptions of the same components are omitted. It should be understood that the thickness, length, width and other dimensions of the various components in the embodiments of the present application shown in the drawings, as well as the overall thickness, length, width and other dimensions of the integrated device, are for illustrative purposes only, and should not constitute any limitation to the present application.

In the present application, the battery cell may include lithium ion secondary battery, lithium ion primary battery, lithium sulfur battery, sodium lithium ion battery, sodium ion battery or magnesium ion battery etc. The battery cell is cylindrical.

The battery mentioned in embodiments of the present application refers to a single physical module that includes multiple battery cells to provide higher voltage and capacity. For example, the battery mentioned in the present application may include a battery module or a battery pack, and the like. In the above, the multiple battery cells may be in serial, parallel or hybrid connection to directly form the battery. The hybrid connection means that the multiple battery cells are connected with each other both in series and in parallel. The multiple battery cells may also be first in serial or in parallel or in hybrid connection with each other to form a battery cell group, and then the multiple battery cell groups are in serial or in parallel or in hybrid connection with each other to form the battery. The battery may include a box body for packaging one or more battery cells. The box body may prevent a liquid or other foreign object from affecting the charging or discharging of the battery cells.

The battery cell includes an electrode assembly and an electrolytic solution, the electrode assembly being composed of a positive electrode plate, a negative electrode plate and a separator. The battery cell works mainly by moving metal ions between the positive electrode plate and negative electrode plate. The positive electrode plate includes a positive current collector and a positive electrode active material layer. The positive electrode active material layer is coated on the surface of the positive current collector, the positive current collector not coated with the positive electrode active material layer protrudes from the positive current collector coated with the positive electrode active material layer, and the positive current collector not coated with the positive electrode active material layer is used as the positive electrode tab. Taking a lithium-ion battery cell as an example, the material of the positive current collector may be aluminum, and the positive electrode active material may be lithium cobaltate, lithium iron phosphate, ternary lithium, or lithium manganate, etc. The negative electrode plate includes a negative current collector and a negative electrode active material layer. The negative electrode active material layer is coated on the surface of the negative current collector, the negative current collector not coated with the negative electrode active material layer protrudes from the negative current collector coated with the negative electrode active material layer, and the negative current collector not coated with the negative electrode active material layer is used as the negative electrode tab. The material of the negative current collector may be copper, and the negative electrode active material may be carbon or silicon, etc. In order to ensure that a large current passes without fusing, the number of positive electrode tabs is multiple and the positive electrode tabs are stacked together, and the number of negative electrode tabs is multiple and the negative electrode tabs are stacked together. The material of the separator may be PP (polypropylene) or PE (polyethylene), etc. In the present application, the electrode assembly may be in a winding structure or may be in a laminated/stacked structure.

Improving the energy density of batteries is an important direction for the development of the battery industry at present. The inventors noticed that batteries formed by arranging multiple cylindrical battery cells often have the problem of low space utilization rate, and the low space utilization rate of the box body of the battery may directly affect the energy density of the battery.

The inventors found through careful searches that because the cross-section of the cylindrical battery cell is circular, after a plurality of cylindrical battery cells are arranged, there will be a certain space that cannot be used, causing waste. If the diameter of the battery cell is larger than that of the box body, more space in the box body is wasted, and the number of the battery cells arranged in the box body may also be limited, which further increases the waste of space and severely limits the improvement of the energy density of the battery.

In view of this, in order to improve the space utilization rate of the battery to increase the energy density of the battery, the inventors has designed a battery through careful researches, so that the ratio of the diameter of the battery cell to the area of the accommodation cavity of the box body on the plane M perpendicular to the central axis of the battery cell does not exceed 25×10⁻⁶, so as to make the space utilization in the box body more reasonable, effectively reduce the space waste in the box body, increase the space utilization rate of the box body, and thereby effectively improve the energy density of the battery.

The battery disclosed in the embodiments of the present application may be used, but not limited to, in electric device such as vehicles, ships or aircrafts, and the battery disclosed in the present application may be used to form the power source system of the electric device.

Embodiments of the present application provide an electric device using the battery as a power source. The electric device may be, but not limited to, a mobile phone, a tablet, a notebook computer, an electric toy, an electric tool, a battery car, an electric vehicle, a ship, a spacecraft, and the like. Among them, the electric toy may include fixed or mobile electric toy, for example, game console, electric car toy, electric ship toy and electric airplane toy, etc. and the spacecraft may include airplane, rocket, space shuttle, spaceship, etc.

The battery described in the embodiments of the present application is not only limited to be applied to the electric device described above, but can also be applied to all electric devices that use batteries. However, for brief description, the following embodiments will be described by taking, as an example, an electric device of an embodiment of the present application being a vehicle.

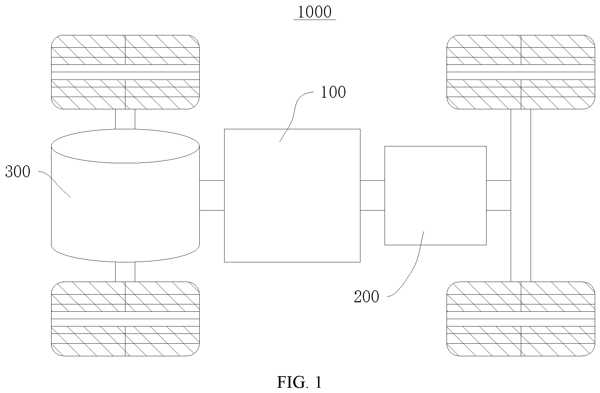

Referring to FIG. 1, FIG. 1 is a schematic structural view of a vehicle 1000 provided in some embodiments of the present application. The vehicle 1000 may be a fuel vehicle, a gas vehicle or a new energy vehicle, and the new energy vehicle may be a pure electric vehicle, a hybrid power vehicle or an extended-range vehicle, etc. A battery 100 is provided inside the vehicle 1000, and the battery 100 may be provided at the bottom, head or tail of the vehicle 1000. The battery 100 may be used for supplying power to the vehicle 1000. For example, the battery 100 may be used as an operating power source of the vehicle 1000. The vehicle 1000 may further include a controller 200 and a motor 300, the controller 200 being used to control the battery 100 to supply power to the motor 300, for example, for working power requirements during starting, navigating and running of the vehicle 1000.

In other embodiments, the battery 100 can not only be used as an operating power source for the vehicle 1000, but also be used as a driving power source for the vehicle 1000 to replace or partially replace fuel oil or natural gas to provide power for the vehicle 1000.

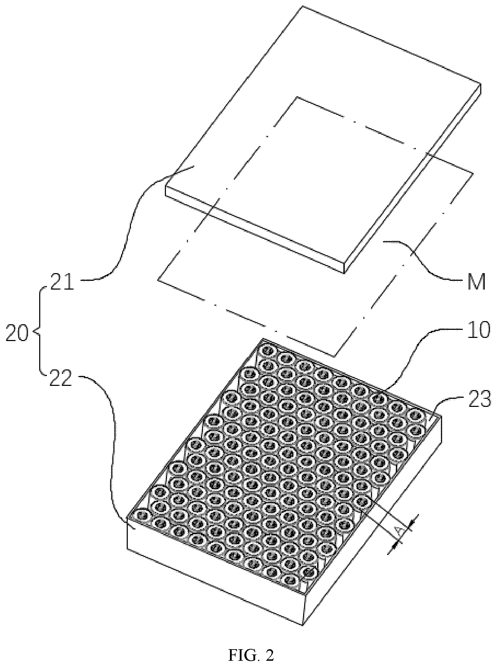

As shown in FIG. 2, FIG. 2 is an exploded view of a battery 100 provided in some embodiments of the present application. The battery 100 may include multiple battery cells 10 and a box body 20, and the multiple battery cells 10 are arranged inside the box body 20. The box body 20 includes a first part 21 and a second part 22, wherein the first part 21 and the second part 22 cover each other to form an accommodation cavity 23, and a plurality of battery cells 10 are placed in the cavity of the battery. In the above, the shapes of the first part 21 and the second part 22 may be determined according to the shape of the combination of a plurality of battery modules, and each of the first part 21 and the second part 22 may have an opening. For example, the first part 21 and the second part 22 each may be a hollow cuboid and has only one surface as an opening surface, the openings of the first part 21 and the second part 22 are oppositely arranged, and the first part 21 and the second part 22 cover each other to form the box body 20 with a closed accommodation cavity 23, or the second part 22 may be a hollow cuboid and has only one surface as an opening surface, the first part 21 is plate-shaped, and the first part 21 covers the opening surface of the second part 22 to form the box body 20 with a closed cavity, and after being connected in parallel or in series or in hybrid, the plurality of battery cells 10 are placed in the box body 20 formed by the first part 21 and the second part 22 covering each other.

According to some embodiments of the present application, continuing to refer to FIG. 2, some embodiments of the present application provide a battery 100. The battery 100 includes: a plurality of battery cells 10 which are cylindrical; and a box body 20, the box body 20 having an accommodation cavity 23, the accommodation cavity 23 being configured to accommodate the plurality of battery cells 10, wherein the area of the accommodation cavity 23 on a plane M perpendicular to the central axes of the battery cells 10 is S, and the diameter of a single battery cell 10 is A, satisfying, A /S≤25×10⁻⁶.

In the above, the plurality of battery cells 10 may be arranged in multiple rows in the accommodation cavity 23 of the box body 20, the central axes of the plurality of battery cells 10 are parallel to each other, the diameters of the battery cells 10 are approximately the same, and the battery cells 10 of any two adjacent rows may be arranged in misalignment with each other.

The plane M perpendicular to the central axis of the battery cell 10 for the accommodation cavity 23 refers to the plane M perpendicular to the central axes of the plurality of battery cells 10.

In order to test the effect of the ratio of the diameter A of the battery cell 10 to the area S of the accommodation cavity 23 on the plane M perpendicular to the central axis of the battery cell 10 on the space utilization rate of the battery 100, the following test was carried out:

test conditions: the area S of the accommodation cavity 23 on the plane M perpendicular to the central axis of the battery cell 10 being 2239839 mm², and the battery cells 10 being of a diameter, the value of which is taken from 15 mm to 60 mm at same interval. The results are shown in the table below.

Table 1 Test result of area utilization rate of box body 20 of battery 100 corresponding to ratio of diameter A of the battery cell 10 to the area S of the accommodation cavity 23 of the box body 20 on the plane M perpendicular to the central axis of the battery cell 10

| A (mm) | S(mm²) | A/S (10⁻⁶) | Area utilization rate |
|---|---|---|---|
| 15 | 2239839 | 6.7 | 65.5% |
| 20 | 2239839 | 8.9 | 65.3% |
| 25 | 2239839 | 11.2 | 63.7% |
| 30 | 2239839 | 13.4 | 64.7% |
| 35 | 2239839 | 15.6 | 69.8% |
| 40 | 2239839 | 17.9 | 67.9% |
| 45 | 2239839 | 20.1 | 71.2% |
| 50 | 2239839 | 22.3 | 70.0% |
| 55 | 2239839 | 24.6 | 63.3% |
| 60 | 2239839 | 26.8 | 50.1% |

From the above test results, it may be seen that when the ratio of the diameter A of the battery cell 10 to the area S of the accommodation cavity 23 of the box body 20 on the plane M perpendicular to the central axis of the battery cell 10 is 20.1×10⁻⁶, the area utilization rate of the box body 20 reaches 70% or higher, and when the ratio of the diameter A of the battery cell 10 to the area S of the accommodation cavity 23 of the box body 20 on the plane M perpendicular to the central axis of the battery cell 10 is less than 20.1×10⁻⁶, the area utilization rate of the box body 20 gradually tends to a distance with decrease in the ratio of the diameter A of the battery cell 10 to the area S of the accommodation cavity 23 of the box body 20 on the plane M perpendicular to the central axis of the battery cell 10, so that the area utilization rate of the box body 20 may be kept at 60% or above.

When the ratio of the diameter A of the battery cell 10 to the area S of the accommodation cavity 23 of the box body 20 on the plane M perpendicular to the central axis of the battery cell 10 is greater than 20.1×10⁻⁶, the area utilization rate of the box body 20 gradually decreases to be lower than 60% with increase in the ratio of the diameter A of the battery cell 10 to the area S of the accommodation cavity 23 of the box body 20 on the plane M perpendicular to the central axis of the battery cell 10. As shown in the above table, when the ratio of the diameter A of the battery cell 10 to the area S of the accommodation cavity 23 of the box body 20 on the plane M perpendicular to the central axis of the battery cell 10 reaches 26.8×10⁻⁶, the area utilization rate of the box body 20 decreases to 50.1%.

Hence, in the present application, the ratio of diameter A of the battery cell 10 to the area S of the accommodation cavity 23 of the box body 20 on the plane M perpendicular to the central axis of the battery cell 10 is controlled in a range of smaller than or equal to 25×10⁻⁶, so as to enable the battery 100 to have relatively high space utilization rate.

In the above, the area utilization rate of the box body 20 = (the number of battery cells 10 in the box body 20 × the cross-sectional area of a single battery cell) / area S of the accommodation cavity 23 of the box body 20 on a plane M perpendicular to the central axis of the battery cell 10, and in the case where the area S of the accommodation cavity 23 of the box body 20 on the plane M perpendicular to the central axis of the battery cell 10 is constant, the final number of the battery cells 10 in the box body 20 is in negative correlation with the diameter of the battery cells 10.

In the present application, the ratio of diameter A of the battery cell 10 to the area S of the accommodation cavity 23 of the box body 20 on the plane M perpendicular to the central axis of the battery cell 10 is controlled at A/S≤25×10⁻⁶, which is beneficial to reduce the waste of the corner region area in the box body 20 and increase the number of battery cells 10 arranged in the box body 20, so that the battery 100 has a higher space utilization rate, achieving the effect of increasing the energy density of the battery 100.

According to some embodiments of the present application, the diameter A of the single battery cell 10 is ≥15mm.

The smaller the diameter of the battery cell 10 is, the more difficult it is to manufacture the battery cell 10, and in the case where the area of the box body 20 is constant, the number of arranged battery cells is more in order to achieve the same space utilization rate, leading to increased manufacturing cost of the overall battery 100. In the present application, the diameter of the battery cell 10 is set to be greater than or equal to 15mm, which can effectively avoid the risks of increasing the manufacturing difficulty and manufacturing cost of the battery cells 10.

According to some embodiments of the present application, 1500000mm²≤ S≤ 3000000mm².

In some embodiments, the area S of the accommodation cavity of the box body 20 on the plane M perpendicular to the central axis of the battery cell 10 is between 2000000 mm² and 2500000 mm². Exemplarily, the area S of the accommodation cavity of the box body 20 on the plane M perpendicular to the central axis of the battery cell 10 may be 2239839 mm² or 2020688 mm².

The area S of the accommodation cavity 23 of the box body 20 on a plane M perpendicular to the central axes of the battery cells 10 is between 1500000mm² and 3000000mm², effectively ensuring the area of the accommodation cavity of the box body 20, and enabling the battery 100 to keep high power and performance.

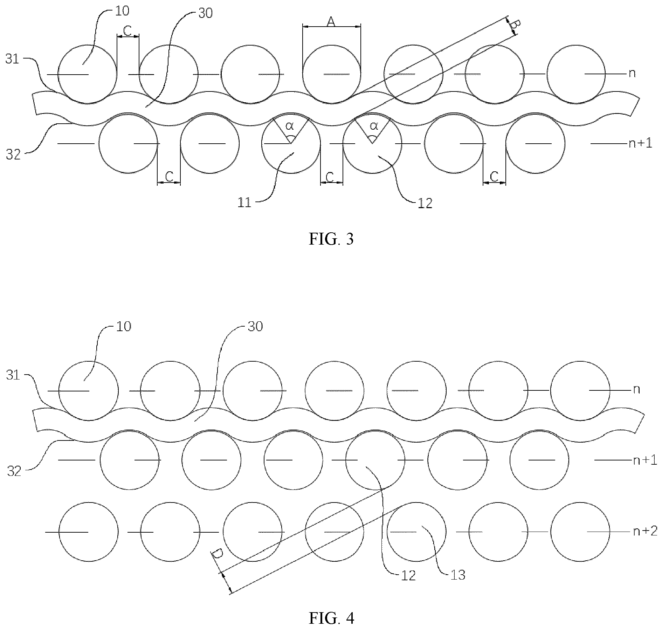

According to some embodiments of the present application, referring to FIG. 3, FIG. 3 is a local front view of a battery, in a first state, provided in some embodiments of the present application. The battery 100 further includes a thermal management member 30, the thermal management member 30 being provided between two adjacent rows of battery cells 10, wherein the thickness of the thermal management member 30 is B, which satisfies 0.06≤ B/A≤0.14.

The thermal management member 30 is used to accommodate a fluid to regulate the temperatures of the multiple battery cells 10. In the case of reducing the temperatures of the battery cells 10, the thermal management member 30 can accommodate a cooling medium to regulate the temperatures of the multiple battery cells 10. At this time, the thermal management member 30 may also be called a cooling member, a cooling system, a cooling plate, a liquid cooling plate, and the like. In addition, the thermal management member 30 may also be used for heating, which is not limited in the embodiments of the present application. In the above, the fluid may be circulated to achieve better temperature regulation effect.

In order to increase the contact area between the thermal management member 30 and the battery cells 10, the thermal management member 30 may be in the shape of a flat tube. The thermal management member 30 in the shape of a flat tube includes a first surface 31 and a second surface 32 opposite to each other in its thickness direction, wherein each of the first surface 31 and the second surface 32 has a plurality of arc-shaped slots, and the battery cells 10 are arranged in the arc-shaped slots to be in direct or indirect contact with the thermal management member 30.

It can be understood that in the implementation form of "battery cells 10 of two adjacent rows are arranged in misalignment with each other", the thermal management member 30 may be in a wave shape corresponding to the outer peripheral surfaces of the battery cells 10, and the thermal management member 30 is provided between the battery cells 10 of the two adjacent rows, to perform temperature management on the battery cells 10 of the two adjacent rows.

The thickness of the thermal management member 30 indicates the linear distance between the first surface 31 and the second surface 32. The material of the thermal management member 30 may be copper, aluminum, etc. with good thermal conduction performance.

When the battery 100 includes the thermal management member 30, the thickness of the thermal management member 30 directly affects the thermal management effect of the battery 100, and at the same time, the thermal management member 30 occupies the space in the box body 20, thereby affecting the space occupancy rate of the box body 20.

In order to test the effect of the ratio of the thickness B of the thermal management member 30 to the diameter A of the battery cell 10 on the space utilization rate and thermal management effect of the battery 100, the following test was carried out:

test conditions: the diameter A of the battery cell 10 being 45 mm, the area S of the accommodation cavity 23 on the plane M perpendicular to the central axis of the battery cell 10 being 2239839 mm², and the thermal management effect of the battery 100 being measured by the highest temperature of the battery cell 10 during the fast charging of the battery 100 (the lower the highest temperature of the battery cell 10 during the fast charging of the battery 100, the more prominent the thermal management effect of the thermal management member 30 on the charge-induced heating of the battery 100). The results are shown in the table below.

Table 2 Test result of area utilization rate and thermal management effect of box body 20 of battery corresponding to ratio of thickness B of the thermal management member 30 to diameter A of the battery cell 10

| B (mm) | A (mm) | B/A | Area utilization rate | Highest temperature T of battery cell during fast charging (°C) |
|---|---|---|---|---|
| 1.5 | 45 | 0.033 | 71.2% | 68.0 |
| 2 | 45 | 0.044 | 71.2% | 65.5 |
| 2.5 | 45 | 0.056 | 71.2% | 62.9 |
| 2.7 | 45 | 0.06 | 71.2% | 60.0 |
| 3 | 45 | 0.067 | 71.2% | 59.1 |
| 3.5 | 45 | 0.078 | 71.2% | 58.5 |
| 4 | 45 | 0.089 | 71.2% | 57.8 |
| 4.5 | 45 | 0.100 | 71.2% | 57.2 |
| 5 | 45 | 0.111 | 71.2% | 56.9 |
| 5.5 | 45 | 0.122 | 71.2% | 55.5 |
| 6 | 45 | 0.133 | 71.2% | 54.9 |
| 6.5 | 45 | 0.144 | 57% | 50.5 |
| 7 | 45 | 0.156 | 57% | 49.8 |

It can be seen from the above test results that the highest temperature of the battery cell 10 during fast charging decreases with the increase in the ratio of B/A. When the ratio of the thicknesses B of the thermal management member 30 to the diameter A of the battery cell 10 is greater than 0.14, the area utilization rate of the box body 20 is reduced. When the ratio of the thicknesses B of the thermal management member 30 to the diameter A of the battery cell 10 is less than 0.06, the highest temperature of the battery cell 10 is higher than 60°C during the fast charging.

The ratio of the thickness B of the thermal management member 30 to the diameter A of the battery cell 10 is controlled between 0.06 and 0.14, which can effectively ensure the thermal management effect of the thermal management member 30 and simultaneously enable the battery 100 to have a higher space utilization rate.

In some embodiments, the ratio of the thickness B of the thermal management member 30 to the diameter A of the battery cell 10 may be controlled between 0.065 and 0.135, which is beneficial to further ensure the thermal management effect of the thermal management member 30 on the battery 100 on the premise of not greatly affecting the space utilization rate of the battery 100.

The thermal management member 30 is arranged between battery cells 10 of two adjacent rows, and the thermal management member 30 performs temperature management on the battery cells 10 to heat or cool the battery cells 10 according to the influence of the battery 100 use environment or other factors, so as to ensure the stability of the performance of the battery cell 10.

The arrangement of the thermal management member 30 may directly affect the space utilization rate of the battery 100, but if the thickness of the thermal management member is too small, it may directly affect the structural strength of the thermal management member 30, which cannot meet the overall structure strength requirements of the battery 100, and may cause over-small flow rate of a fluid in the thermal management member 30, which cannot meet the requirements of temperature management of the battery 100; and if the thickness of the thermal management member 30 is too large, it may cause redundance and waste of heat exchange energy, and more importantly, may occupy too much space in the box body 20, affecting the space occupancy rate and losing energy density.

In the present application, the ratio of the thickness B of the thermal management member 30 to the diameter A of the battery cell 10 is controlled between 0.06 and 0.14, effectively reducing the risk of insufficient structural strength and substandard fluid flow rate caused by insufficient thickness of thermal management member 30, and simultaneously avoid the thermal management member 30 from occupying excessive space in the box body 20, which is conducive to improving the space occupancy rate of the whole battery 100 and thereby ensuring the energy density of the battery 100.

According to some embodiments of the present application, continuing to refer to FIG. 3, the minimum distance between two adjacent battery cells 10 of the same row is C, satisfying 0.1≤(B+C)/A≤0.145.

For the convenience of understanding, it is defined that the thermal management member 30 is provided between the battery cells 10 of the n-th row and the battery cells 10 of the n+1-th row, wherein n is a natural number greater than or equal to 1, and the battery cells 10 of the n+1-th row includes first battery cells 11 and second battery cells 12, where C is the minimum distance between the outer peripheral surface of the first battery cell 11 and the outer peripheral surface of the second battery cell 12.

In the above, the straight line where the minimum distance is located passes through the circle centers of the first battery cell 11 and the second battery cell 12.

It should be noted that the minimum distance between any two battery cells in the n-th row is C, and the minimum distance between any two battery cells in the n+1-th row is also C. The above definitions of the first battery cell 11 and the second battery cell 12 are only for the convenience of understanding.

In order to test the effect of the ratio of the sum of the thickness B of the thermal management member 30 and the minimum distance C between the two adjacent battery cells 10 of the same row to the diameter A of the battery cell 10 on the space utilization rate and thermal management effect of the battery 100, the following test was carried out:

test conditions: the diameter A of the battery cell 10 being 45 mm, the area S of the accommodation cavity 23 of the box body 20 on the plane M perpendicular to the central axis of the battery cell 10 being 2239839 mm², the thermal management member 30 being of a thickness B, the value of which is taken as 3mm, 4.5mm and 6mm respectively from a range thereof, and the thermal management effect of the battery 100 being measured by the highest temperature of the battery cell 10 during the fast charging of the battery 100, wherein the lower the highest temperature of the battery cell 10 during the fast charging of the battery 100, the more prominent the thermal management effect of the thermal management member 30 on the charge-induced heating of the battery 100. The results are shown in the table below.

**Table 3 Test result of area utilization rate and thermal management effect of box body 20 corresponding to ratio of the sum of thickness B of the thermal management member 30 and the minimum distance between two adjacent battery cells 10 of the same row to diameter A of the battery cell 10.**

| A (mm) | B (mm) | C (mm) | (B+C)/A | Area utilization rate | Highest temperature T of battery cell during fast charging (°C) |
|---|---|---|---|---|---|
| 45 | 3 | 0.4 | 0.08 | 71% | 63.2 |
| 45 | 3 | 0.5 | 0.08 | 71% | 62.9 |
| 45 | 3 | 1 | 0.09 | 71% | 61.3 |
| 45 | 3 | 1.5 | 0.10 | 71% | 59.8 |
| 45 | 3 | 2.5 | 0.12 | 71% | 59.0 |
| 45 | 3 | 3.5 | 0.145 | 71% | 58.2 |
| 45 | 3 | 3.6 | 0.15 | 57% | 58 |
| 45 | 4.5 | 0.4 | 0.108 | 71% | 59.9 |
| 45 | 4.5 | 0.5 | 0.11 | 71% | 59.8 |
| 45 | 4.5 | 1 | 0.12 | 71% | 59.6 |
| 45 | 4.5 | 1.5 | 0.13 | 71% | 59.5 |
| 45 | 4.5 | 2 | 0.145 | 71% | 59.4 |
| 45 | 4.5 | 3.5 | 0.18 | 57% | 58.8 |
| 45 | 4.5 | 4.5 | 0.2 | 57% | 58.2 |
| 45 | 6 | 0.4 | 0.142 | 71% | 55.0 |
| 45 | 6 | 0.5 | 0.145 | 71% | 54.9 |
| 45 | 6 | 1 | 0.16 | 57% | 54.1 |
| 45 | 6 | 1.5 | 0.17 | 57% | 53.2 |

It can be seen from the above test results that the highest temperature of the battery cell 10 during fast charging decreases with the increase in the ratio of (B+ C)/A, and meanwhile, when the ratio of (B+C)/A is less than 0.1, the highest temperature of the battery cell 10 during fast charging is higher than 60°C, and when the ratio of (B+C)/A is greater than 0.145, the area utilization rate of the box body 20 is reduced.

In the present application, the ratio of (B+C)/A is controlled between 0.1 and 0.145, which can effectively ensure the thermal management effect of the thermal management member 30 on the battery 100 and simultaneously enable the battery 100 to have a higher space utilization rate.

Based on the premise that the ratio of the thickness B of the thermal management member 30 to the diameter A of the battery cell 10 is greater than or equal to 0.06 and less than or equal to 0.14, the ratio of the sum of the thickness B of the thermal management member 30 and the minimum distance C between two adjacent battery cells 10 in the same row to the diameter A of the battery cell 10 is greater than or equal to 0.1 and less than or equal to 0.145. In the state where the range of the ratio of the diameter of the cylindrical battery cell 10 to the thickness of the thermal management member 30 is determined, the magnitude of the contact angle α of the battery cell 10 and thermal management member 30 directly affects the thermal management effect on the battery cell 10, wherein the contact angle α is the central angle corresponding to the outer surface of a portion of the battery cell 10 in contact with the thermal management member 30, the larger the contact angle α between the battery cell 10 and the thermal management member 30 is, the larger the area of the battery cell 10 covered by the thermal management member 30 is, and the better the thermal management effect on the battery cells 10 is. When the minimum distance C between two adjacent battery cells 10 in the same row is too small, the contact angle α between the battery cell 10 and the thermal management member 30 is too small, resulting in insufficient thermal management effect, making the temperature of the battery 100 too high during fast charging, and when the minimum distance C between two adjacent battery cells 10 in the same row is too large, the area utilization rate of the battery pack may be affected.

The present application limits the ratio of the sum of the thickness B of the thermal management member 30 and the minimum distance C between two adjacent battery cells 10 in the same row to the diameter A of the battery cell 10, which can effectively reduce the risk of too small contact angle α between the battery cell 10 and the thermal management member 30, thereby effectively ensuring the thermal management effect, and simultaneously avoiding the waste of space in the box body 20 due to that the thickness B of the thermal management member 30 and the minimum distance C between two adjacent battery cells 10 in the same row are relatively too large.

In the above, the value of C may be 0.5mm≤C≤3.5mm, and in other embodiments, the value of C may be 1mm≤C≤2.5mm.

When the minimum distance C between two adjacent battery cells 10 in the same row is too small, if any of the battery cells 10 undergoes thermal runaway, the battery cells 10 adjacent to the battery cell 10 undergoing the thermal runaway are easy to be affected by the thermal runaway and also undergo thermal runaway. When the minimum distance C between two adjacent battery cells 10 in the same row is too large, too much space may be wasted, affecting the area utilization rate of the battery.

The minimum distance C between two adjacent battery cells 10 of the same row is controlled between 0.5mm and 3.5mm, which can effectively reduce the risk of thermal runaway diffusion between the two adjacent battery cells of the same row, and simultaneously avoid occupying too much space, which is conducive to improving the energy density of the battery 100 while considering the safety of the battery 100.

According to some embodiments of the present application, referring to FIG. 4, FIG. 4 is a local front view of a battery, in a second state, provided in some embodiments of the present application, wherein the minimum distance between two adjacent battery cells 10 in different rows is D, satisfying 1mm≤D≤2.5mm.

For the convenience of understanding, it is defined that the battery 100 includes the battery cells 10 of the n+1-th row and the battery cells 10 of the n+2-th row, wherein the battery cells 10 in the n+1-th row and the battery cells 10 in the n+2-th row are adjacent and have a gap therebetween, the battery cells 10 in the n+1-th row include the second battery cells 12, and the battery cells 10 in the n+2-th row include the third battery cells 13, wherein the second battery cells 12 are adjacent to the third battery cells 13, and D is the minimum distance between the outer peripheral surface of the second battery cell 12 and the outer peripheral surface of the third battery cell 13.

It can be understood that the straight line where the minimum distance is located passes through the circle centers of the second battery cell 12 and the third battery cell 13.

It should be indicated that no thermal management member 30 is provided between the battery cells 10 of the n+1-th row and the battery cells 10 of the n+2-th row. Between the battery cells 10 of the n+1-th row and the battery cells 10 of the n+2-th row, the minimum distance between any two adjacent battery cells located in different rows is D. The above definitions of the second battery cell 12 and the third battery cell 13 are only for the convenience of understanding.

If the minimum distance D between two adjacent battery cells 10 located in different rows is too small, when a certain battery cell 10 undergoes thermal runaway, it is easy to cause the battery cells 10 in the adjacent row to undergo thermal runaway due to the influence of high temperature; however, if the minimum distance D between two adjacent battery cells 10 located in different rows is too large, too much space in the box body 20 may be wasted, thereby affecting the space utilization rate of the battery 100.

In the present application, the minimum distance D between two adjacent battery cells 10 located in different rows is set between 1mm and 2.5 mm, which can effectively reduce the risk of mutual diffusion between battery cells 10 in different rows during thermal runaway while considering the space utilization rate of the battery 100, facilitating increasing the energy density of the battery 100 while considering the safety of the battery 100.

According to some embodiments of the present application, 1.5mm≤D≤2.5mm.

The minimum distance D between two adjacent battery cells 10 located in different rows is controlled between 1.5 mm and 2.5 mm, which is conducive to further reducing the risk of mutual diffusion between battery cells 10 of different rows during thermal runaway.

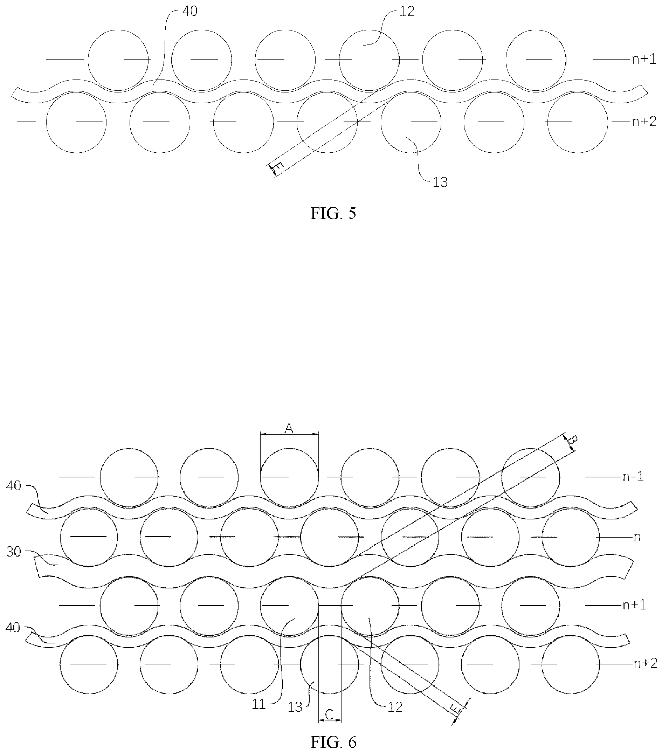

According to some embodiments of the present application, referring to FIG. 5, FIG. 5 is a local front view of a battery, in a third state, provided in some embodiments of the present application. The battery 100 further includes a thermal insulation member 40, the thermal insulation member 40 being provided between the battery cells of two adjacent rows, wherein the minimum distance between the battery cells of two rows in contact with the same thermal insulation member 40 is E, which satisfies 0.5mm≤E≤2.5mm.

The thermal insulation member 40 is a component with a low thermal conductivity coefficient that can block heat transfer. The thermal conduction member 40 may be in various implementation structures, for example, it may be a silicone pad or an aerosol pad with good thermal insulation effect.

For the convenience of understanding, it is defined that the thermal insulation member 40 is provided between the battery cells 10 of the n+1-th row and the battery cells 10 of the n+2-th row, wherein the battery cells 10 of the n+1-th row and the battery cells 10 of the n+2-th row are adjacent, the battery cells 10 of the n+1-th row include the second battery cells 12, and the battery cells 10 of the n+2-th row include the third battery cells 13, wherein the second battery cells 12 are adjacent to the third battery cells 13, and E is the minimum distance between the outer peripheral surface of the second battery cell 12 and the outer peripheral surface of the third battery cell 13.

It can be understood that the straight line where the minimum distance is located passes through the circle centers of the second battery cell 12 and the third battery cell 13.

It should be indicated that between the battery cells 10 of the n+1-th row and the battery cells 10 of the n+2-th row, the minimum distance between any two adjacent battery cells 10 located in different rows is E. The above definitions of the second battery cell 12 and the third battery cell 13 are only for the convenience of understanding.

A thermal insulation member 40 is provided between battery cells 10 of two adjacent rows, and the thermal insulation member 40 can play a role of heat insulation for the adjacent two rows of battery cells 10 located at two sides of the thermal insulation member 40, avoiding temperature transferring between different rows of battery cells 10 and effectively reducing the influence of the thermal runaway of the battery cell 10 on the battery cells 10 in the adjacent row. The risk of mutual diffusion between battery cells 10 of different rows during thermal runaway is effectively reduced due to the arrangement of the thermal insulation member 40, and in order to improve the space utilization rate, the minimum distance between the battery cells 10 of two adjacent rows provided with the thermal insulation member 40 is provided may be controlled between 0.5mm and 2.5mm, effectively reducing the waste of the space of the box body 20 while ensuring the installation space of the thermal insulation member 40.

According to some embodiments of the present application, 1mm≤E≤2mm.

The minimum distance between the battery cells 10 of two adjacent rows provided with the thermal insulation member 40 is controlled at 1 mm to 2 mm, which is conducive to further ensuring the thickness of compressed thermal insulation member 40, so as to ensure the thermal insulation effect and simultaneously further reduce the waste of the space.

According to some embodiments of the present application, referring to FIG. 6, FIG. 6 is a local front view of a battery, in a fourth state, provided in some embodiments of the present application. The multiple battery cells 10 are arranged in multiple rows, and battery cells 10 of each two rows form a battery unit. The battery 100 further includes a thermal management member 30 and a thermal insulation member 40, wherein the thermal management member 30 is provided between the two adjacent battery units, and the thermal insulation member 40 is provided between the two rows of battery cells 10 of the battery unit. In the above, the thickness of the thermal management member 30 is B, the minimum distance between two rows of battery cells 10 of the battery unit is E, and the minimum distance between two adjacent battery cells 10 in the same row is C, satisfying, (B+C+E)/A≤0.16.

For convenience of understanding, it is defined that the battery 100 includes the battery cells 10 of the n-1-th row, the battery cells 10 of the n-th row, the battery cells 10 of the n+1-th row, and the battery cells 10 of the n+2-th row, wherein the battery cells 10 of the n-1-th row and the battery cells 10 of the n-th row form the first battery unit, the battery cells 10 of the n+1-th row and the battery cells 10 of the n+2-th row form the second battery unit form the second battery unit, the thermal management member 30 is provided between the first battery unit and the second battery unit, that is, the thermal management member 30 is provided between the battery cells 10 of the n-th row and the battery cells 10 of the n+1-th row, and the thermal insulation member 40 is provided between the battery cells 10 of the n-1-th row and the battery cells 10 of the n-th row and/or between the battery cells 10 of the n+1-th row and the battery cells 10 of the n+2-th row.

In the above, the battery cells 10 of the n+1-th row includes first battery cells 11 and second battery cells 12, and C is the minimum distance between the outer peripheral surface of the first battery cell 11 and the outer peripheral surface of the second battery cell 12.

It can be understood that the straight line where the minimum distance is located passes through the circle centers of the first battery cell 11 and the second battery cell 12.

The battery cells 10 of the n+2-th row include the third battery cells 13, wherein the second battery cells 12 are adjacent to the third battery cells 13, and E is the minimum distance between the outer peripheral surface of the second battery cell 12 and the outer peripheral surface of the third battery cell 13.

It can be understood that the straight line where the minimum distance is located passes through the circle centers of the second battery cell 12 and the third battery cell 13.

It should be indicated that the minimum distance between any two battery cells of any row is C, and between the battery cells 10 of the n+1-th row and the battery cells 10 of the n+2-th row, the minimum distance between any two adjacent battery cells 10 located in different rows is E. The above definitions of the first battery cell 11, the second battery cell 12 and the third battery cell 13 are only for the convenience of understanding.

In the above, the structure and principle of the thermal management member 30 may be the same as the aforementioned thermal management member 30, and the structure and principle of the thermal insulation member 40 may be the same as the aforementioned thermal insulation member 40.

In order to test the effect of the ratio of the sum of the thickness B of the thermal management member 30, the minimum distance E between the battery cells 10 of two rows of the battery unit and the minimum distance C between the two adjacent battery cells 10 of the same row to the diameter A of the battery cell 10 on the space utilization rate of the battery 100, the following test was carried out:

test conditions: the diameter A of the battery cell 10 being 45mm, and the area S of the accommodation cavity 23 of the box body 20 on the plane M perpendicular to the central axis of the battery cell 10 being 2239839 mm². The results are shown in the table below.

**Table 4 Test result of area utilization rate of box body 20 corresponding to the ratio of the sum of thickness B of the thermal management member 30 and the minimum distance between two adjacent battery cells 10 of the same row to diameter A of the battery cell 10**

| A (mm) | B (mm) | C (mm) | (B+C)/A | E (mm) | (B+C+E)/A | Area utilization rate |
|---|---|---|---|---|---|---|
| 45 | 3 | 1.5 | 0.1 | 0.3 | 0.11 | 71.2% |
| 45 | 3 | 1.5 | 0.10 | 1 | 0.12 | 71.2% |
| 45 | 3 | 1.5 | 0.10 | 1.5 | 0.13 | 71.2% |
| 45 | 3 | 1.5 | 0.10 | 2.5 | 0.16 | 71.2% |
| 45 | 3 | 2.5 | 0.12 | 1.5 | 0.16 | 71.2% |
| 45 | 3 | 2.5 | 0.12 | 2.5 | 0.18 | 57.0% |
| 45 | 3 | 3.5 | 0.14 | 0.5 | 0.16 | 71.2% |
| 45 | 3 | 3.5 | 0.14 | 1.5 | 0.18 | 57.0% |
| 45 | 3.5 | 1.5 | 0.11 | 1.5 | 0.14 | 71.2% |
| 45 | 3.5 | 1.5 | 0.11 | 2.5 | 0.17 | 57.0% |
| 45 | 3.5 | 1.5 | 0.11 | 1.5 | 0.14 | 71.2% |
| 45 | 4 | 1.5 | 0.12 | 1.5 | 0.15 | 71.2% |
| 45 | 4 | 1.5 | 0.12 | 2.5 | 0.17 | 57.0% |
| 45 | 4.5 | 1.5 | 0.13 | 0.5 | 0.14 | 71.2% |
| 45 | 4.5 | 2 | 0.14 | 1 | 0.17 | 57.0% |
| 45 | 5.5 | 1 | 0.14 | 0.5 | 0.16 | 71.2% |
| 45 | 6 | 0.5 | 0.14 | 0.5 | 0.16 | 71.2% |

From the above test results, it can be seen that when the ratio of (B+C+E)/A is greater than 0.16, the area utilization rate of the battery 100 decreases, and in the present application, the ratio of (B+C+E)/A is controlled at 0.16 or below, enabling the battery 100 to have higher space utilization.

According to some embodiments of the present application, the minimum distance between two adjacent battery cells 10 of the same row is C, satisfying 0.5mm≤C≤ 3.5mm.

It should be understood that no any thermal insulation member 40 or thermal management member 30 is provided between two adjacent battery cells 10 of the same row, and when the minimum distance between the two adjacent battery cells 10 in the same row is too small, if any of the battery cells 10 undergoes thermal runaway, the battery cells 10 adjacent to the battery cell 10 undergoing the thermal runaway are easy to be affected by the thermal runaway and also undergo thermal runaway. When the minimum distance between two adjacent battery cells 10 in the same row is too large, space waste may be easily caused.

In the present application, the minimum distance C between two adjacent battery cells 10 of the same row is controlled between 0.5mm and 3.5mm, which can effectively reduce the risk of thermal runaway diffusion caused by the too small distance between the two adjacent battery cells 10 of the same row, and simultaneously avoid excessive waste of the space in the box body 20 due to the too large distance between the two adjacent battery cells 10 of the same row, which is conducive to improving the energy density of the battery 100 while considering the safety of the battery 100.

According to some embodiments of the present application, 1mm≤ C≤2.5mm. The minimum distance C between two adjacent battery cells 10 of the same row is greater than or equal to 1mm and smaller than or equal to 2.5 mm, further reducing the risk of thermal runaway diffusion caused by too small distance between two adjacent battery cells 10 of the same row.

It should be understood that based on the implementation form of 0.5mm≤E≤2.5mm and (B+C+E)/A≤0.16, if the battery 100 satisfies 0.5mm≤C≤3.5mm at the same time, for the overall battery 100, the space utilization rate of the battery 100 may be improved and simultaneously, the safety of the battery 100 is considered effectively.

According to some embodiments of the present application, the thermal conductivity coefficient of the thermal insulation member 40 is K, which satisfies K≤0.1W/m·K.

The thermal conductivity coefficient refers to the heat flux per unit temperature gradient. It can be understood that the larger the thermal conductivity coefficient is, the better the thermal conduction performance of the thermal insulation member 40 is, and the poorer the thermal insulation performance of the thermal insulation member 40 is.

In the above technical solution, the thermal conductivity coefficient of the thermal insulation member 40 is less than or equal to 0.1 W/m·K, which is beneficial to ensure the thermal insulation performance of the thermal insulation member 40, thereby improving the thermal insulation effect of the thermal insulation member 40.

According to some embodiments of the present application, the material of the thermal insulation member 40 includes at least one of mica, asbestos, aerogel, foam plastic, and silica gel.

The material of thermal insulation member 40 may be one of mica, asbestos, aerogel, foamed plastics and silica gel. For example, the thermal insulation member 40 may be the thermal insulation member made of aerogel, the thermal insulation member 40 made of silica gel or the thermal insulation member 40 made of foam plastic. Of course, the thermal insulation member 40 may also be made of combination of at least two materials of mica, asbestos, aerogel, foam plastic, and silica gel.

The material of the thermal insulation member 40 directly affects the thermal conductivity coefficient of the thermal insulation member 40, so as to influence the thermal insulation effect of the thermal insulation member 40. The material technology of the thermal insulation member 40 of the present application is mature, which can effectively ensure the thermal insulation effect of the thermal insulation member 40 and enable strong practicability.

Referring to FIG. 2 and FIG. 6, some embodiments of the present application provide a battery 100. The battery 100 includes a box body 20, thermal insulation members 40, thermal management members 30 and a plurality of battery cells 10, wherein the battery cells 10 are cylindrical. The box body 20 has an accommodation cavity 23, wherein the accommodation cavity 23 is used for accommodating the plurality of battery cells 10, and the plurality of battery cells 10 are arranged in multiple rows in the accommodation cavity 23. Each two rows of battery cells 10 form a battery unit. The thermal management member 30 is provided between the two battery units, and the thermal insulation member 40 is provided between the two rows of battery cells 10 of the battery unit.

In the above, the diameter of the battery cell 10 is A, the area of the accommodation cavity 23 on the plane M perpendicular to the central axis of the battery cell 10 is S, the thickness of the thermal management member 30 is B, the minimum distance between two rows of battery cells 10 of the battery unit is E, and the minimum distance between two adjacent battery cells 10 in the same row is C, satisfying, A≥15mm, 1500000mm²≤S≤3000000mm², A/S≤25×10⁻⁶, 0.06≤B/A≤0.14, 0.5mm≤C≤3.5mm, 0.5mm≤E≤2.5mm, 0.1≤(B+C )/A≤0.145, (B+C+E)/A≤0.16.

The battery 100 of the embodiments of the present application can effectively ensure the safety of the battery 100, reduce the risk of increased thermal runaway range caused by that the thermal runaway of the battery cells 10 mutual diffuses, and effectively ensure the temperature management effect of the thermal management member 30 on the battery 100, and make the battery 100 have a higher space utilization rate, effectively improving the safety performance and energy density of the battery 100.

Some embodiments of the present application provide an electric device, including at least one battery 100 according to the above solutions, and the battery 100 is used to provide electric energy.

In the above, the electric device may be any aforementioned device or system using the battery 100.

It should be noted that, without conflict, the features in the embodiments in the present application may be combined with each other.

Although the present application has been described with reference to preferred embodiments, various modifications may be made and equivalents may be substituted for elements thereof without departing from the scope of the present application. In particular, as long as there is no structural conflict, the technical features mentioned in the various embodiments may be combined in any manner. The present application is not limited to the specific embodiments disclosed herein, but includes all technical solutions falling within the scope of the claims.

## Claims

1. A battery, comprising:
a plurality of battery cells which are cylindrical;
a box body, having an accommodation cavity, wherein the accommodation cavity is configured for accommodating the plurality of battery cells,
wherein an area of the accommodation cavity on a plane perpendicular to central axes of the battery cells is S, and a diameter of a single one of the battery cell is A, satisfying, A /S≤25×10⁻⁶.

2. The battery according to claim 1, wherein the diameter A of the single battery cells is ≥15mm.

3. The battery according to claim 1, wherein 1500000mm²≤S≤3000000mm².

4. The battery according to any one of claims 1 to 3, wherein the battery further comprises:
at least one thermal management member, each provided between two adjacent rows of the battery cells,
wherein a thickness of the thermal management member is B, satisfying 0.06≤B/A≤0.14.

5. The battery according to claim 4, wherein a minimum distance between two adjacent battery cells located in a same row is C, satisfying 0.1≤(B+C)/A≤0.145.

6. The battery according to any one of claims 1 to 5, wherein a minimum distance between two adjacent battery cells located in different rows is D, satisfying 1mm≤D≤2.5mm.

7. The battery according to claim 6, wherein 1.5mm≤D≤2.5mm.

8. The battery according to any one of claims 1 to 3, wherein the battery further comprises:
at least one thermal insulation member, each provided between two adjacent rows of the battery cells,
wherein a minimum distance between battery cells of two rows in contact with a same thermal insulation member is E, satisfying 0.5mm≤E≤2.5mm.

9. The battery according to claim 8, wherein 1mm≤E≤2mm.

10. The battery according to any one of claims 1 to 9, wherein the plurality of battery cells are arranged in multiple rows, each two rows of the battery cells form one battery unit, and the battery further comprises:
at least one thermal management member, each provided between two adjacent battery units; and
at least one thermal insulation member, each provided between battery cells of two rows of the battery unit,
wherein a thickness of the thermal management member is B, and a minimum distance between the battery cells of two rows of the battery unit is E, and a minimum distance between two adjacent battery cells in a same row is C, satisfying (B+C+E)/A≤0.16.

11. The battery according to any one of claims 1 to 10, wherein a minimum distance between two adjacent battery cells in a same row is C, satisfying 0.5mm≤ C≤3.5mm.

12. The battery according to claim 11, wherein 1mm≤C≤2.5mm.

13. The battery according to any one of claims 8 to 10, wherein a thermal conductivity coefficient of the thermal insulation member is K, satisfying K≤0.1W/m·K.

14. The battery according to any one of claims 8 to 10, wherein a material of the thermal insulation member comprises at least one of mica, asbestos, aerogel, foam plastic, and silica gel.

15. An electric device, comprising at least one battery, each of which is according to any one of claims 1 to 14, wherein the battery is configured to supply electric energy.
